## Europäisches Patentamt
## European Patent Office
## Office européen des brevets

(19)

(11) Veröffentlichungsnummer: **0 085 901**

**A1**

(12) **EUROPÄISCHE PATENTANMELDUNG**

(21) Anmeldenummer: **83100739.8**

(22) Anmeldetag: **27.01.83**

(51) Int. Cl.³: **H 02 P 5/16**
**B 60 L 3/06**

(30) Priorität: **04.02.82 DE 3203682**

(43) Veröffentlichungstag der Anmeldung:
**17.08.83 Patentblatt 83/33**

(84) Benannte Vertragsstaaten:
**BE FR GB IT NL**

(71) Anmelder: **BROWN, BOVERI & CIE Aktiengesellschaft**
**Kallstadter Strasse 1**
**D-6800 Mannheim 31(DE)**

(72) Erfinder: **Kahlen, Hans, Dr.**
**Holbeinstrasse 11**
**D-6940 Weinheim-Sulzbach(DE)**

(72) Erfinder: **Angelis, Jürgen., Dipl.-Ing.**
**Strassburger Ring 52**
**D-6800 Mannheim 71(DE)**

(74) Vertreter: **Kempe, Wolfgang, Dr. et al,**
**c/o Brown, Boveri & Cie AG Postfach 351**
**D-6800 Mannheim 1(DE)**

(54) Antriebssystem für Fahrzeuge mit einer Gleichstrommaschine.

(57) Die Erfindung betrifft ein Antriebssystem für Fahrzeuge mit einer Gleichstrommaschine (1) und Ankerstromsteller (2). Zum Schutz des Kollektors der Maschine (1) vor unzulässig hohen Ankerströmen bei stehender bzw. langsam laufender Maschine (1) ist ein Minimalauswahlglied (10) vorgesehen, dem eingangsseitig ein von einer Ankerstrom-Regeleinrichtung (11) geforderter Ankerstrom-Sollwert und ein von einem Maximalwertbildner (9) gebildeter höchst zulässiger Ankerstrom-Sollwert zugeführt werden und das ausgangsseitig stets den kleineren der beiden Sollwerte an den Ankerstromsteller (2) weitergibt. Der Maximalwertbildner (9) bildet den höchst zulässigen Ankerstrom-Sollwert in Abhängigkeit des Maschinendrehzahl-Istwertes und des um eine definierte Zeitspanne verzögerten Ankerstrom-Istwertes.

Fig 1

0085901

BROWN, BOVERI & CIE   AKTIENGESELLSCHAFT
Mannheim                        2. Febr. 1982
Mp.-Nr. 504/82                  ZPT/P3-Pn/Bt

Antriebssystem für Fahrzeuge mit einer Gleichstrommaschine

Die Erfindung bezieht sich auf ein Antriebssystem für
Fahrzeuge mit einer Gleichstrommaschine gemäß dem Oberbegriff des Patentanspruchs 1.

Ein solches Antriebssystem ist aus der DE-OS 31 16 341
bekannt. Beim dort beschriebenen Antriebssystem mit je
einem Gleichstromsteller für Anker- und Feldstrom kann
eine fehlerhafte Bedienung zu Kollektorschäden führen.
Das Anfahren ohne Kupplung mit Hilfe des Ankerstromstellers bei stillstehender Maschine kann den Fahrer dazu
verleiten, das Fahrzeug ohne mechanische Bremse lediglich durch Drücken des "Gaspedals" an Steigungen zu
halten. Dabei fließt ein hoher Ankerstrom über die
stillstehende Maschine, der zu Kollektorschäden führt.
Ein ähnlich hoher schädlicher Ankerstrom wird erzielt,
wenn man mit einem falschen (zu großen) Gang an Steigungen oder Bordsteinkanten anzufahren versucht.

Der Erfindung liegt die Aufgabe zugrunde, für ein Antriebssystem für Fahrzeuge mit einer Gleichstrommaschine der eingangs genannten Art einen Kollektorschutz anzugeben, der ein Überhitzen des Kollektors infolge eines zu hohen Ankerstromes bei stehender bzw. langsam laufender Maschine wirksam verhindert.

Diese Aufgabe wird durch die im Anspruch 1 gekennzeichneten Merkmale gelöst.

Die mit der Erfindung erzielbaren Vorteile bestehen insbesondere darin, daß der Kollektorschutz einfach aufgebaut und preisgünstig herstellbar ist. Das normale Betriebsverhalten des Fahrzeuges wird durch den Kollektorschutz nicht beeinflußt, der Kollektorschutz spricht lediglich bei Fehlverhalten des Fahrers an.

Vorteilhafte Ausgestaltungen der Erfindung sind in den Unteransprüchen gekennzeichnet.

Die Erfindung wird nachstehend anhand des in den Zeichnungen dargestellten Ausführungsbeispiels erläutert.

Es zeigen:

Fig. 1    ein Prinzipschaltbild des erfindungsgemäßen Antriebssystems mit Kollektorschutz,

Fig. 2    eine Variante des Kollektorschutzes.

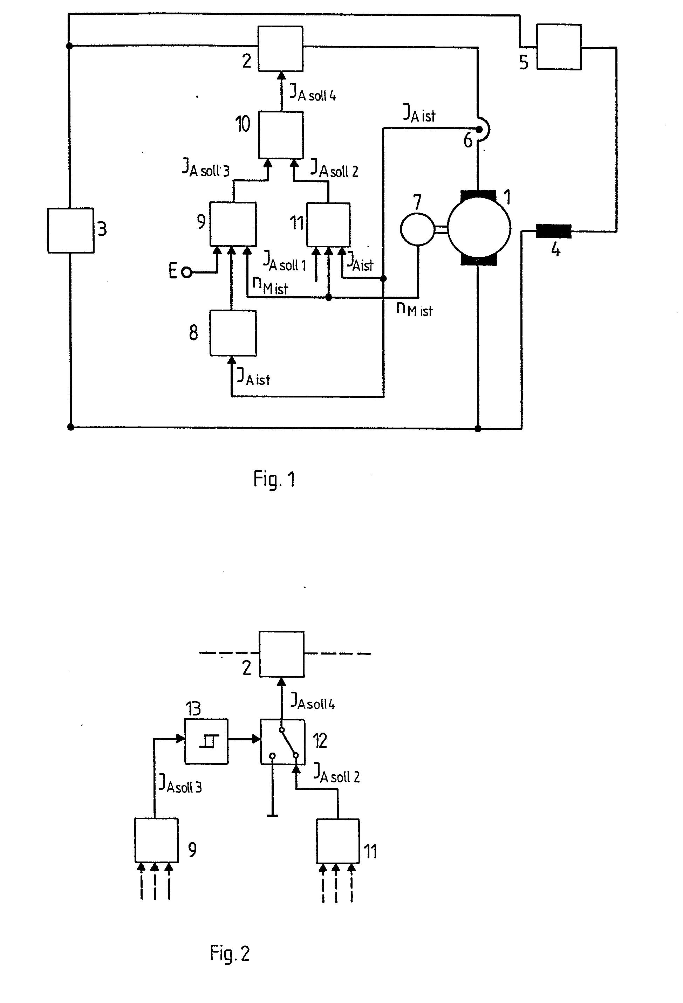

In Fig. 1 ist ein Prinzipschaltbild des erfindungsgemäßen Antriebssystems mit Kollektorschutz dargestellt. Ein Elektrospeicher-Straßenfahrzeug wird durch eine fremderregte Gleichstrommaschine 1 angetrieben. Zur Einstellung der Ankerstromes ist ein Ankerstromsteller 2 im Ankerkreis der Maschine 1 vorgesehen, d.h. die erste Ankerklemme der Maschine 1 ist über den Ankerstromsteller 2 mit dem ersten Pol einer Gleichspannungsquelle 3 verbunden, während die zweite Ankerklemme direkt an den zweiten Pol der Gleichspannungsquelle 3 angeschlossen ist. Die Maschine 1 weist eine fremdgespeiste Feldwicklung 4 auf, wobei der Feldstrom mit Hilfe eines der Wicklung 4 vorgeschalteten Feldstromstellers 5 eingestellt wird. Die erste Klemme der Feldwicklung 4 ist über den Feldstromsteller 5 mit dem ersten Pol der Gleichspannungsquelle 3 verbunden, während die zweite Klemme direkt an den zweiten Pol angeschlossen ist.

Zur Messung des im Ankerkreis fließenden Ankerstrom-Istwertes $I_{Aist}$ ist der ersten Ankerklemme eine Stromerfassungseinrichtung 6 vorgeschaltet. Zur Messung des Maschinendrehzahl-Istwertes $n_{Mist}$ ist die Gleichstrommaschine 1 mit einer Drehzahlerfassungseinrichtung 7 versehen.

Der Ankerstromistwert $I_{Aist}$ wird über ein Zeitglied 8, vorzugsweise ein PT1-Glied, verzögert einem Maximalwertbildner 9 zugeleitet. Dem Maximalwertbildner 9 liegen als weitere Eingangsgrößen eine Referenzspannung E und der Maschinendrehzahl-Istwert $n_{Mist}$ an. Mit Hilfe dieser drei Eingangsgrößen bildet der Maximalwertbildner 9 einen höchst zulässigen, für den Kollektor der Maschine 1 unschädlichen Ankerstrom-Sollwert $I_{Asoll}$ 3 in Abhängigkeit der Maschinendrehzahl und gibt diesen Wert an einen ersten Eingang eines Minimalauswahlgliedes 10 ab.

Ferner ist eine Ankerstrom-Regeleinrichtung 11 vorgesehen, die eingangsseitig den (unverzögerten) Ankerstrom-Istwert $I_{Aist}$, den Maschinendrehzahl-Istwert $n_{Mist}$ und einen vom "Gaspedal" des Elektro-Fahrzeuges vorgegebenen Ankerstrom-Sollwert $I_{Asoll}$ 1 empfängt. Mit Hilfe dieser drei Eingangsgrößen bildet die Ankerstrom-Regeleinrichtung 11 einen geforderten Ankerstrom-Sollwert $I_{Asoll}$ 2 und gibt diesen Wert an einen zweiten Eingang des Minimalauswahlgliedes 10 ab.

Das Minimalauswahlglied 10 gibt den kleineren der beiden Ankerstrom-Sollwerte von $I_{Asoll}$ 2 und $I_{Asoll}$ 3 an den Ankerstromsteller 2 als Wert $I_{Asoll}$ 4 ab, d.h. es wird verglichen, ob der von der Ankerstrom-Regeleinrichtung 11 geforderte Sollwert $I_{Asoll}$12 zulässig ist.

Bei normalem Betrieb des Elektro-Fahrzeuges ist der von der Ankerstrom-Regeleinrichtung 11 geforderte Ankerstrom-Sollwert $I_{Asoll}$ 2 stets kleiner als der vom Maximalwertbildner 9 gebildete höchst zulässige Ankerstrom-Sollwert $I_{Asoll}$ 3, d. h. das Minimalauswahlglied 10 gibt stets den Wert $I_{Asoll}$ 2 an den Ankerstromsteller 2 ab. Bei einem Fehlverhalten des Fahrers jedoch (Halten des Fahrzeuges ohne mechanische Bremse an Steigungen, Einlegen eines zu großen Ganges an Steigungen oder Bordsteinkanten) steigt der Wert $I_{Asoll}$ 2 infolge des vom "Gaspedal" vorgegebenen, für die Maschinendrehzahl zu großen Ankerstrom-Sollwertes $I_{Asoll}$ 1 stark an. Dieser schädliche hohe Ankerstromsollwert $I_{Asoll}$ 2 wird jedoch nur während einer vom Zeitglied 8 abhängigen Zeitspanne vom Minimalauswahlglied 10 durchgeschaltet. Nach Ablauf der definierten Verzögerungszeit des Zeitgliedes 8 ist bei diesem schädlichen Betriebsfall der Wert $I_{Asoll}$ 3 kleiner als der Wert $I_{Asoll}$ 2, d.h. der für den Kollektor der Maschine 1 unschädliche höchstzulässige Ankerstrom-Sollwert $I_{Asoll}$ 3 wird vom Minimalauswahlglied 10 durchgeschaltet. Folglich wird der Ankerstrom auf einen unschädlichen Wert abgeregelt.

Die definierte Verzögerungszeit des Zeitgliedes 8 wird so eingestellt, daß ein Anfahren des Fahrzeuges im höchsten Gang (geringstes Anfahrdrehmoment) auf ebener Strecke mit geringem Strom gerade noch möglich ist.

In Fig. 2 ist eine Variante zur Anordnung gemäß Fig. 1 dargestellt, bei der anstelle der Minimalauswahl ein Schalter eingesetzt wird. Der Ankerstrom-Regeleinrichtung 11 werden dabei ebenfalls die Eingangssignale $I_{Aist}$, $n_{Mist}$ sowie $I_{Asoll\,1}$ zugeführt. Ausgangsseitig jedoch gibt die Regeleinrichtung 11 den Wert $I_{Asoll\,2}$ an den ersten Eingang eines Schalters 12 ab, ein Minimalauswahlglied 11 ist also bei dieser Variante nicht vorhanden. Der zweite Eingang des Schalters 12 ist mit Null-Potential verbunden, während der Ausgang des Schalters 12 an den Ankerstromsteller 2 angeschlossen ist.

Dem Maximalwertbildner 9 werden ebenfalls die Eingangssignale $n_{Mist}$, E sowie der verzögerte Wert von $I_{Aist}$ zugeleitet. Ausgangsseitig jedoch gibt der Maximalwertbildner 9 den Wert $I_{Asoll\,3}$ an einen Schmitt-Trigger 13 ab. Der Schmitt-Trigger 13 steuert ausgangsseitig den Schalter 12 an. Unterschreitet der dem Schmitt-Trigger 13 zugeführte Wert $I_{Asoll\,3}$ einen minimalen einstellbaren Triggerpegel (z.B. Null), so schaltet der Schalter 12 seinen zweiten Eingang, also den Wert Null als Wert $I_{Asoll\,4}$ an den Ankerstromsteller 2 durch. Überschreitet der dem Schmitt-Trigger 13 zugeführte Wert $I_{Asoll\,3}$ den einstellbaren minimalen Triggerpegel, so schaltet der Schalter 12 seinen ersten Eingang, also den Wert $I_{Asoll\,2}$ als Wert $I_{Asoll\,4}$ an den Ankerstromsteller 2 durch.

Das beschriebene Verfahren läßt sich in gleicher Weise bei Antriebssystemen mit Gleichstrom-Reihenschlußmaschinen anwenden, bei denen Anker und Feld in Reihe geschaltet sind.

504/82                                    6        0085901

<u>A n s p r ü c h e</u>

1. Antriebssystem für Fahrzeuge mit einer Gleichstrommaschine und Ankerstromsteller, <u>dadurch gekennzeichnet,</u> daß ein Ablöseglied (10; 12,13) vorgesehen
ist, dem eingangsseitig die Ankerstrom-Sollwerte einer
Ankerstrom-Regeleinrichtung (11) sowie eines Maximalwertbildners (9) zur Bildung des höchstzulässigen Ankerstromsollwertes zuführbar sind und das ausgangsseitig
den kleineren der beiden Ankerstrom-Sollwerte an den
Ankerstromsteller (2) weitergibt, wobei dem Maximalwertbildner (9) eingangsseitig der Maschinendrehzahl-Istwert
($n_{Mist}$) und der mittels eines Zeitgliedes (8) verzögerte
Ankerstrom-Istwert ($I_{Aist}$) anliegen.

2. Antriebssystem nach Anspruch 1, dadurch gekennzeichnet, daß als Ablöseglied ein Minimalauswahlglied
(10) vorgesehen ist.

3. Antriebssystem nach Anspruch 1, dadurch gekennzeichnet, daß als Ablöseglied ein Schalter (12) vorgesehen ist, dessen erster Eingang mit der Ankerstrom-Regeleinrichtung (11) verbunden ist, dessen zweiter
Eingang auf Null-Potential liegt, dessen Ausgang an den
Ankerstromsteller (2) angeschlossen ist und der über
einen Schmitt-Trigger (13) ansteuerbar ist, wobei der
Schmitt-Trigger (13) eingangsseitig mit dem Maximalwertbildner (9) verbunden ist.

4. Antriebssystem nach einem der vorstehenden
Ansprüche, dadurch gekennzeichnet, daß als Zeitglied (8)
ein $PT_1$-Glied vorgesehen ist.

Fig. 1

Fig. 2

Europäisches
Patentamt

EUROPÄISCHER RECHERCHENBERICHT

**0085901**
Nummer der Anmeldung

EP 83 10 0739

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| A | FR-A-2 162 500 (LICENTIA)<br>* Seite 2, Zeile 1 - Seite 3, Zeile 8; Figuren 1,2 * | 1,3 | H 02 P 5/16<br>B 60 L 3/06 |
| A | DE-A-2 549 850 (SIEMENS)<br>* Seite 4, Zeile 15 - Seite 8, Zeile 28; Figuren 1,2 * | 1,3,4 | |
| A | FR-A-2 090 675 (LICENTIA)<br>Seite 2, Zeilen 2-19; Figur * | 1 | |
| A | DE-B-1 100 775 (SIEMENS)<br>* Spalte 3, Zeile 58 - Spalte 4, Zeile 27; Figur 4 * | 1,2 | |
| A | AT-B- 317 365 (E. KOPECNY)<br>* Seite 2, Zeilen 37-57; Figur 1 * | 1,3 | RECHERCHIERTE SACHGEBIETE (Int. Cl. ³) |
| A | DE-A-1 931 161 (WESTINGHOUSE)<br>* Seite 3, Zeilen 8-23; Figur 1 * | 1 | H 02 P<br>H 02 H<br>B 60 L |
| A | FR-A-2 277 513 (BBC) | 1 | |
| A,D | EP-A-0 063 756 (BBC) | | |

Der vorliegende Recherchenbericht wurde für alle Patentansprüche erstellt.

| Recherchenort<br>DEN HAAG | Abschlußdatum der Recherche<br>16-05-1983 | Prüfer<br>HOUILLON J.C.P.L. |
|---|---|---|